# EUROPÄISCHE PATENTSCHRIFT

(11) **EP 2 146 868 B1**
(45) Veröffentlichungstag und Bekanntmachung des Hinweises auf die Patenterteilung: **15.08.2012**
(21) Anmeldenummer: 08757926.4
(22) Anmeldetag: 09.04.2008
(51) Int. Cl.: B60N 2/48

(54) **AKTIVE KOPFSTÜTZE FÜR PKW-RÜCKBÄNKE**
ACTIVE HEAD SUPPORT FOR REAR BENCH SEATS IN A PASSENGER VEHICLE
APPUIE-TÊTE ACTIF POUR BANQUETTE ARRIÈRE D'AUTOMOBILE

(30) Priorität: 07.05.2007 DE 102007021804
(43) Veröffentlichungstag der Anmeldung: 27.01.2010
(73) Patentinhaber: Universität Kassel, 34125 Kassel (DE)
(72) Erfinder: KLEIN, Bernd, 34379 Calden (DE); BANNACK, Robert, 76137 Karlsruhe (DE); SCHÖNBORN, Steffen, 64839 Münster (DE); NÖLKE, Olaf, 34266 Niestetal (DE)
(74) Vertreter: Reinhardt, Thomas Johannes
(86) Internationale Anmeldenummer: PCT/DE2008/000588
(87) Internationale Veröffentlichungsnummer: WO 2008/135005

(56) Entgegenhaltungen:
- DE-A1- 10 236 259
- DE-A1- 10 300 978
- US-A- 4 865 388

## Beschreibung

### Stand der Technik

Die vorliegende Erfindung betrifft eine Kopfstütze zum Einbau in Sitze von Fahrzeugen, die aus einer Normalstellung in eine Unfallstellung verfahrbar ist, mittels eines Mechanismus, der sensorgesteuert aktivierbar ist. Ein solcher Sitz nach dem Oberbegriff des Anspruchs 1 ist z.B. aus der DE 103 00 978 A1 bekannt.

Heute sind die Kopfstützen in vielen Automobilen Bestandteil des passiven Sicherheitssystems. Einige Kopfstützen, sogenannte aktive Kopfstützen, neigen sich beim Aufprall nach vorne, um den Kopf wertvolle Millisekunden eher auffangen zu können.

Auf dem Sektor des Pkw-Insassenschutzes besteht derzeit zwar die Möglichkeit, zwischen verschiedenen Schutzsystemen für den Fahrer oder Beifahrer zu wählen, aber für die Passagiere auf der Rückbank sind in nachteilhafter Weise keine brauchbaren Produkte auf dem Markt, obwohl alle Insassen während eines Unfalls prinzipiell gleichermaßen gefährdet und schutzbedürftig sind.

Beim Frontaufprall wird zum Beispiel der Insasse durch das rückartige Abbremsen in Fahrtrichtung beschleunigt und im Idealfall vom Gurt aufgefangen, wobei dieser schon einen Teil der Energie absorbiert. Anschließend wird der Körper dann zurück gegen den Sitz und die Kopfstütze geschleudert, welche die restliche Energie des Aufpralls aufnehmen muss.

Medizinisch gesehen treten bei diesen ruckartigen Bewegungen sehr starke Belastungen im Bereich der Halswirbel auf. Dieses Phänomen, auch als Hals-Wirbel-Syndrom (HWS) bezeichnet, resultiert daraus, dass dass der Oberkörper und der Kopf durch den Stoß von hinten unterschiedlich stark beschleunigt werden.

Die Folgen sind überdehnte Bänder im Kopf- und Halsbereich, Nervenquetschungen, Entzündungen, Einblutungen, Verschiebungen oder sogar Brüche von Wirbeln.

Das Tückische an HWS-Distorsionen ist, dass das Verletzungsrisiko nicht zwingend von der Aufprallwucht abhängt, denn selbst leichte Crashs können Verletzungen verursachen. Dabei tauchen Beschwerden manchmal erst nach Tagen auf. Mögliche Symptome sind Kopf- und Nackenschmerzen, Übelkeit, Schlaf- und Konzentrationsprobleme, Sehstörungen und Schwindelgefühle bis hin zu Lähmungserscheinungen.

Das bei Front- oder Heckaufprall, die die häufigsten Unfallkonstellationen repräsentieren, auftretende Halswirbelsäulen-Schleudertrauma (HWS-Distorsion, HWS-Syndrom), das auch als sogenannte Whiplash-Verletzung (Peitschenschlag-Phänomen) bezeichnet wird, zählt in den hochmotorisierten Ländern zu den für die Versicherungswirtschaft teuersten Verletzungen, die einen Anteil von ca. 75 % aller Kosten ausmachen.

Besonders schlimme Verletzungen sind möglich, wenn die Kopfstützen zu niedrig eingestellt sind. Dies führt dann dazu, dass der Kopf über die Kopfstütze hinweg schlägt.. Eine andere Ursache für Verletzungen kann ein zu großer Abstand sein, den der Kopf zur Kopfstütze einnimmt, zum Beispiel durch eine vergleichsweise lockere und entspannte Sitzposition. Dies führt schon ab einem Abstand von mehr als drei Zentimetern zu einer Erhöhung des Verletzungsrisikos, da durch den größeren Abstand der Kopf mit einer höheren Energie aufschlägt.

Im Stand der Technik wird zum Zwecke der Auslösung des Mechanismus einer aktiven Kopfstütze meist ein Drucksensor als sogenanntes Prallziel benutzt, das im Sitzinneren befestigt ist. Dieser Ansatz besitzt jedoch Nachteile, da hierbei immer ein Kompromiss aus Komfort der Sitzlehne und Auslösesicherheit gefunden werden muss, denn die Sicherheit für ein Auslösen des Mechanismus ist nur dann gegeben, wenn zwischen dem Prallziel und dem zurückschnellenden Rücken des Sitzinsassen kein zu dickes Polster ist. Dies bedingt Beeinträchtigungen des Komforts.

Eine andere Problematik bei den Drucksensoren als Bestandteil der Auslösemechanik ist die eigentliche Auslösesicherheit, die nur gegeben ist, wenn der Körper mit einem bestimmten Gewicht und einer damit verbundenen Geschwindigkeit auf das Prallziel trifft. So kann es passieren, dass kleine, zierliche Personen aufgrund ihres geringen Körpergewichtes oder ihrer geringen Größe den Mechanismus nicht zum Auslösen bringen. Auch kann es passieren, dass sich der Körper des Sitzinsassen aus wie auch immer gearteten Umständen beim Crash nicht in der Normalsitzposition befindet und dadurch das Prallziel der Auslösemechanik nicht optimal trifft. Auch wenn der Impuls durch einen Crash nicht exakt von hinten, sondern eher seitlich von hinten kommt, kann der Körper eines Sitzinsassen das Prallziel verfehlen. Die Nachteile durch Systeme mit derartigen Druckaufnahmevorrichtungen innerhalb der Lehne sind somit vielfältig, da die optimale Sicherheit durch das System nur durch absolute Ideal- bzw. Normbedingungen gewährleistet wird.

Im Stand der Technik sind auch elektronisch ausgelöste Systeme bekannt. Diese können in nachteilhafter Weise nur in relativ begrenztem Maße den Abstand zwischen Kopf und Kopfstütze mindern, oder sind unwirtschaftlich, weil sie beispielsweise nach einem Aufprall ähnlich wie ein Airbag nicht wieder verwendbar sind.

Es ist Aufgabe der vorliegenden Erfindung, eine aktive Kopfstütze so weiterzubilden, dass sie wieder verwendbar ist und bei einem Unfall für eine geminderte Crashbelastung für die Personen sorgt.

### Vorteile der Erfindung

Mit den Maßnahmen des unabhängigen Anspruches wird die Aufgabe gelöst.

In den Unteransprüchen sind vorteilhafte Ausgestaltungen Weiterbildungen und Verbesserungen des jeweiligen Gegenstandes der Erfindung angegeben.

Diese Aufgabe wird im wesentlichen dadurch gelöst, dass die Kopfstütze im wesentlichen aus drei Teilen besteht, einem Gehäusekörper, eine untere Prallplatte und eine obere Prallplatte, sowie Verankerungsmittel für den Gehäusekörper in dem Sitz, vorzugsweise an der oberen Kante der Sitzlehne, wobei die obere Prallplatte und die unter Prallplatte mit dem Gehäusekörper durch einen Mechanismus verbunden ist, wobei der Mechanismus dazu eingerichtet ist, zur Einnahme der Unfallstellung die untere Prallplatte nach vorn zu verfahren und gleichzeitig die obere Prallplatte nach oben um eine Verbindungsachse zwischen oberer und unterer Prallplatte zu verschwenken, wobei die obere Prallplatte aus einer im wesentlichen horizontalen Ausrichtung in eine aufgerichtete, im wesentlichen vertikale Ausrichtung verschwenkbar ist.

Die Schwenkbewegung wird vorzugsweise durch eine Schenkelfeder bewirkt, deren Schenkel einerseits an einem Gelenkarm und andererseits an der Innenseite der oberen Prallplatte anliegt. Andere, gleichwirkende Kräfte, beispielsweise vorgespannte Luftfederelemente, können ebenfalls hierfür verwendet werden. Ist die Endstellung dieser Schwenkbewegung erreicht, verhindert eine Rastung ein Zurückverschwenken. Die Bewegung nach vorn ist eine lineare Bewegung, die durch entsprechende Führungen geführt ist und von einer Kraft bewirkt wird, die vorzugsweise aus einer Feder stammt, die in Richtung der linearen Verfahrung drückt oder zieht.

Die Auslösung des Mechanismus erfolgt vorzugsweise durch Kopplung mit einem Airbagaktivierungssignal, das einen Magnetschalter oder eine ähnliche Schalteinrichtung ansteuert, mit dem die beiden vorgenannten und vorgespannten Federelemente beispielsweise durch Wegziehen eines Arretierungsbolzens gelöst werden. Nach Auslösen bei einem Unfall kann die erfindungsgemäße Kopfstütze von Hand wieder in die Normalstellung zurückgefahren werden, wobei die Federelemente wieder vorgespannt werden und dort arretiert werden.

Die erfindungsgemäße Kopfstütze ist in besonderer Weise geeignet für PKW- Rücksitzbänke oder Einzelsitze im Fondbereich, weil die Kopfstütze leicht abnehmbar und wieder aufsteckbar ist, und danach sofort voll funktionsfähig ist.

In bevorzugter Ausführungsform sind mechanische Federn vorgesehen, um die lineare Bewegung nach vorn und die Schwenkbewegung durchzuführen, um nach einer Auslösung des Systems die Kopfstütze manuell wieder in ihre Normalstellung bringen zu können.

In vorteilhafter Weise ist eine kostengünstige Integration der erfindungsgemäßen Kopfstütze in neue oder bestehende Sitzsysteme problemlos möglich, weil keine konstruktiven Veränderungen an einem Sitz erforderlich sind, denn die Kopplung zwischen erfindungsgemäßer Kopfstütze und Sitzlehne kann über die im Stand der Technik vielfach eingesetzten beiden Vertikalstreben erfolgen, die tief ins Innere der Lehne eintauchen und dort gerastet gehalten sind.

Im Falle der sehr vorteilhaften Kopplung der erfindungsgemäßen Kopfstütze an eine Rücksitzbank bleibt auch die Flexibilität der Rücksitzbank erhalten, weil die Kopfstützen abnehmbar sind und die elektrische Verbindung zu den Aktuatoren, wie zum Beispiel einem Magnetschalter, durch Stecker getrennt werden kann. Damit lässt sich eine Rücksitzbank ohne weiteres umklappen und sie behält ihre volle, serienmäßige Stabilität gegen Nutzlasten, die sich eventuell im Kofferraum befinden.

Die erfindungsgemäßen, aktiven Kopfstützen bieten eine im Vergleich zum Stand der Technik wesentlich erhöhte Sicherheit dadurch, dass die Kopfstützfläche im Falle eines Unfalls eine wesentlich weitere Erstreckung nach oben besitzt, weil sich die obere Prallplatte nach oben aufrichtet. Damit wird wirksam verhindert, dass der Kopf der Person über die Kopfstütze hinweg schlägt.

Zum zweiten wird durch die lineare Bewegung nach vorn der Abstand zwischen Kopfstütze und Kopf verringert, was die Aufprallgeschwindigkeit des Kopfes an der unteren und oberen Prallplatte vermindert.

Drittens wird die Kopfstütze in der Unfallstellung wesentlich vergrößert, wodurch sich die Druckbelastungen am Kopf vermindern. Des weiteren kann die aktive Kopfstütze gemäß der Erfindung elektronisch ausgelöst werden, wodurch eine zuverlässige Auslösung im Gegensatz zu im Stand der Technik bekannten Systemen erfolgt, wobei diese Kopplung preisgünstig hergestellt werden kann, weil einfach auf ein bereits bestehendes Airbag-Auslösesignal zurückgegriffen werden kann.

Die Auslösung geschieht vorzugsweise durch einen Magnetschalter, der einen Bolzen verfährt, der die obere und die untere Prallplatte in ihrer Normalstellung hält, indem er für eine Arretierung in dieser Stellung sorgt.

Schließlich kann die erfindungsgemäße Kopfstütze in ihrer Normalstellung relativ niedrig ausgeführt werden, um so die Sicht des Fahrers nach hinten oder zur Seite möglichst wenig zu beeinträchtigen. Dazu wird vorgeschlagen, die obere Prallplatte relativ groß und die untere Prallplatte relativ klein der Höhe nach zu dimensionieren.

Gemäß einem weiteren Aspekt der vorliegenden Erfindung wird die Zweiteilung in untere und obere Prallplatte noch weiter dazu ausgenutzt, um die Kopfstütze in Normalstellung relativ klein und in Unfallstellung relativ groß zu machen: Dazu wird vorgeschlagen, die obere Prallplatte nicht einstückig, sondern teleskopierbar in zwei kleineren Stücken auszuführen, wobei vorzugsweise ein nur geringfügig gehemmter Gleitsitz zwischen beiden Teilen durch zwei stabile, die beiden Teile verbindende Halteschienen vorgesehen ist. Durch die Fliehkraft, die bei der schnell durchgeführten Schwenkbewegung ohnehin wirksam wird, kann die teleskopische Bewegung erfolgen, wobei sich die obere Prallplatte ausfährt und in der Größe deutlich zunimmt. Im zusammengezogenen Zustand der Normalstellung besitzt die obere, im Ausführungsbeispiel waagerecht ausgerichtete, obere Prallplatte dann eine deutlich geringere Baugröße, was die Sicht zur Seite weiter verbessert. Die Endstellung besitzt auch wieder eine Rastung, so dass die ausgefahrene Stellung für die gesamte Unfallsituation stabil erhalten bleibt.

Dieses Prinzip kann auch mehrfach geschachtelt, etwa drei Teile, zwei Teleskopsysteme, oder vier/drei- artig angewendet werden, um die obere Prallplatte noch weiter nach oben auszufahren. Damit kann ein erhöhter Schutz gegen nach vorn katapultierte Gepäckstücke aus dem Laderaum eines Kombi-PKW erreicht werden.

Die Kopfstütze ist prinzipiell für Vordersitze und Rücksitze oder auch für Einzelsitze einsetzbar und ist beliebig oft verwendbar, wenn der Auslösemechanismus reversibel ausgeführt ist. In besonders bevorzugter Weise werden die Vorteile der elektronisch auslösenden Systeme mit denen der mechanisch arbeitenden Systeme kombiniert.

### Zeichnungen

Anhand der Zeichnungen werden Ausführungsbeispiele der Erfindung erläutert.

Es zeigen:
Figur 1 eine Ansicht der erfindungsgemäßen, aktiven Kopfstütze mit einstückig ausgeführter oberer Prallplatte in der Normalstellung, Fahrtrichtung nach links, mit Gehäusekörper, unterer Prallplatte, oberer Prallplatte und zwei vertikalen Streben zur Befestigung in einer Sitzlehne;
Figur 2 die erfindungsgemäße Kopfstütze aus Figur 1 nach Auslösung des Mechanismus in halbgeöffneter Stellung, wobei die lineare Endstellung zur Verfahrung nach vorne bereits erreicht ist und die obere Prallplatte bereits in einem Winkel von etwa 45° nach oben aufgerichtet ist;
Figur 3 die erfindungsgemäße Kopfstütze gemäß Ausführungsbeispiel und Fig. 1 und 2, wobei die obere Endstellung der Schwenkbewegung und damit die endgültige Unfallstellung erreicht ist.

### Beschreibung von Ausführungsbeispielen

In den Figuren bezeichnen gleiche Bezugszeichen gleiche oder funktionsgleiche Komponenten.

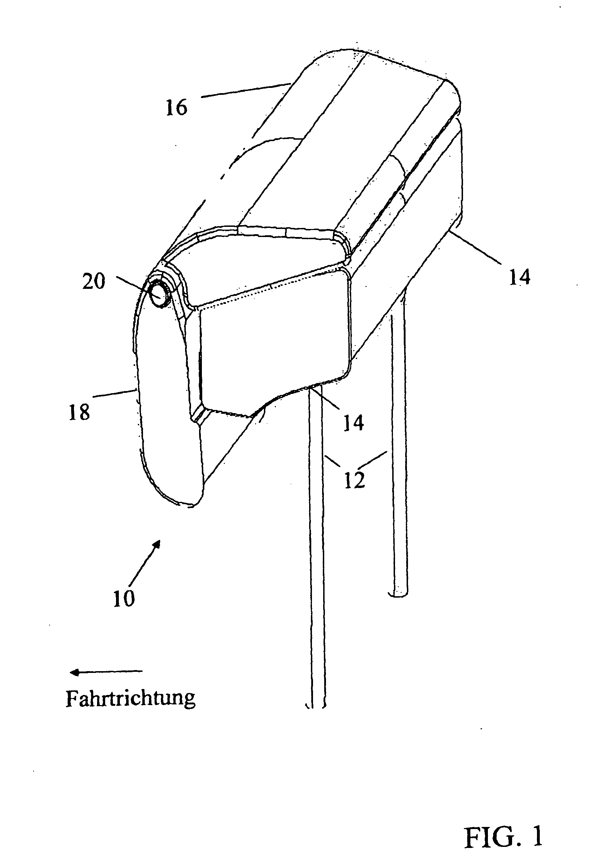

Figur 1 zeigt eine Ansicht der erfindungsgemäßen, aktiven Kopfstütze mit oberer Prallplatte 16 in der Normalstellung, Fahrtrichtung nach links, mit Gehäusekörper 14, unterer Prallplatte 18, oberer, einstückig ausgeführter Prallplatte 16 und zwei vertikalen Streben 12 zur Befestigung in einer Sitzlehne.

Die Vertikalstreben 12 sind, wie im Stand der Technik bekannt, mit Rastungen versehen und können in eine Sitzlehne eingefahren und dort verankert werden. Der Gehäusekörper 14 ist fest mit den Vertikalstreben 12 verbunden und ist durch eine leicht gewölbte Grundfläche an die Form der Lehnenkante angepaßt. Die obere Prallplatte 16 ist schwenkbar an einer Schwenkachse 20 mit der unteren Prallplatte 18 verbunden. In der Normalstellung befindet sich die obere Prallplatte 16 in einer im Wesentlichen waagerechten, nach hinten verschwenkten Stellung und liegt mit ihrer Innenseite auf dem Gehäusekörper 14 auf. Die untere Prallplatte 18 liegt mit ihrer Innenseite an der Vorderseite des Gehäusekörpers 14 an. In bevorzugter Weise sind die beiden Prallplatten 16, 18 und der Gehäusekörper 14 aus Kunststoff im Spritzgussverfahren hergestellt und mit einer stoßdämpfenden Zwischenschicht und mit einem textilen Bezug versehen.

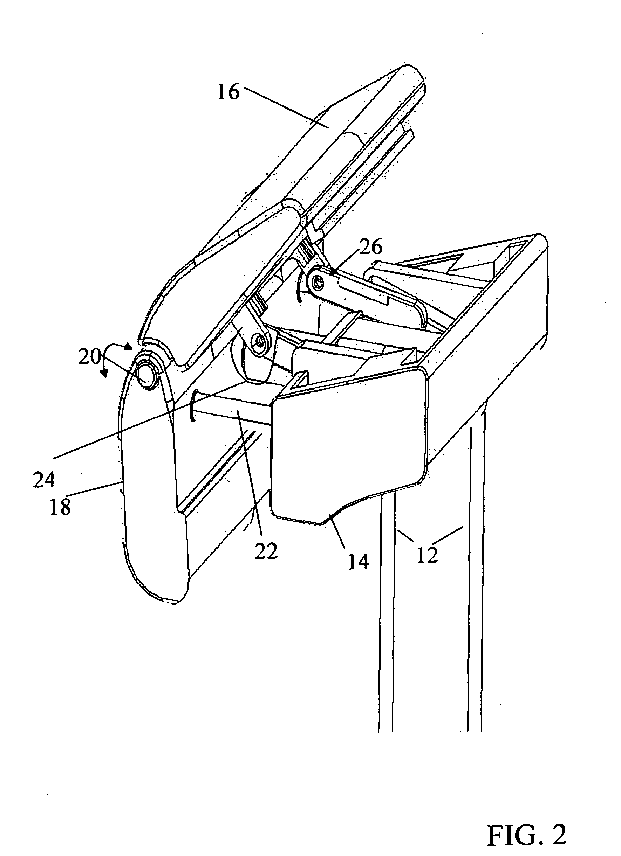

Figur 2 zeigt die erfindungsgemäße Kopfstütze aus Figur 1 nach Auslösung des Mechanismus in halbgeöffneter Stellung, wobei die lineare Endstellung zur Verfahrung nach vorne bereits erreicht ist und die obere Prallplatte 16 bereits in einem Winkel von etwa 45° nach oben aufgerichtet ist;

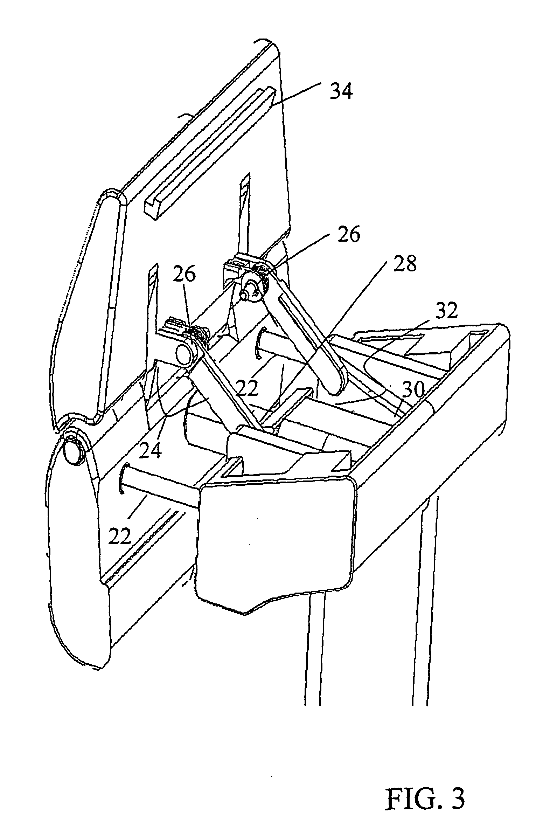

Figur 3 zeigt die Kopfstütze, wobei die obere Endstellung der Schwenkbewegung und damit die endgültige Unfallstellung erreicht ist.

Mit weiterem Bezug zu Figur 2 und 3 ist die untere Prallplatte 18 mit dem Gehäusekörper 14 durch Schiebeführungen 22 verbunden. Eine solche Schiebeführung 22 ist in Fahrtrichtung gesehen rechts und links relativ weit außen vorgesehen, um eine exakte, lineare Verschiebung zu gewährleisten. Die Schiebeführung 22 ist im Beispiel als Hohlzylinder ausgebildet, der fest mit der unteren Prallplatte verbunden ist und in entsprechende, nicht dargestellte Bohrungen ein-und ausfahren kann, die am Gehäusekörper 14 vorgesehen sind.

Eine weitere Führung ist in der Mitte der beiden Schiebeführungen 22 in Form einer ebenfalls als Hohlzylinder ausgebildeten Zylinderführung 28 vorgesehen. Die Zylinderführung 28 enthält einen Hohlzylinder, der an der unteren Prallplatte 18 befestigt ist und in eine in dem Gehäusekörper 14 vorgesehene entsprechende Bohrung eintaucht. Im Inneren des Hohlzylinders 28 befindet sich ein federndes Element, hier bevorzugt eine Axialfeder, die in der Normalstellung aus Figur 1 zusammengedrückt ist und das Bestreben hat, sich auszudehnen, um die in Figur 2 und 3 dargestellte Position zu erreichen. Die Vorspannung der innenliegenden Axialfeder oder eines entsprechenden anderen Kraftelementes sollte so gewählt sein, dass durch das Vorschnellen der unteren Prallfläche keine eigene Verletzungsgefahr bei der Person generiert wird. Es sind Anschläge vorgesehen, um zu verhindern, dass die Schiebeführung 22 und die Zylinderführung 28 sich nicht aus ihren Bohrungen im Gehäusekörper 14 lösen können, wenn die Unfallstellung erreicht ist.

Eine Arretierungskante 34 ist an der Hinter- bzw. Oberkante der oberen Prallplatte 16 fest angebracht, die mit einem Bolzen eines Magnetschalters in Eingriff steht, wenn der Schalter in der für die Normalstellung befindlichen Position ist. Wird der Bolzen durch einen elektrischen Steuerimpuls und den Magnetschalter zurückgezogen, so wird die Arretierung 34 frei und die Axialfeder im Inneren der Zylinderführung 28 kann sich entspannen und treibt die untere Prallplatte nach vorn.

Gleichzeitig schwenkt dann die obere Prallplatte 16 von ihrer waagerechten Position in Figur 1 in ihre senkrechte Position in Figur 3, wobei sie die Zwischenstellung einnimmt, die in Figur 2 gezeigt ist.

Die obere Prallplatte 16 ist von der Form her angepasst an die Kontaktfläche zur unteren Prallplatte 18, indem eine entsprechende verrundete Form als Kontaktfläche an beiden Prallplatten ausgebildet ist. Die obere Prallplatte 16 ist mit der unteren Prallplatte 18 durch die Schwenkachse 20 verbunden und kann bezüglich letzterer um einen Winkel von etwa 90° verschwenkt werden, wobei für beide Endstellungen jeweils Anschläge vorgesehen sind.

Wie besonders aus Figur 3 gut ersichtlich ist, ist die Innenseite der oberen Prallplatte 16 durch eine Gelenkarmkonstruktion 24 mit dem Gehäusekörper 14 verbunden. Dabei ist der plattenseitige Arm fest mit der oberen Prallplatte verbunden und der gehäuseseitige Arm läuft mit einem Zapfen in einer Führungsrille 30 und rastet in der in Figur 3 gezeigten Endstellung in einer Rastungsmulde 32 der Führungsrille 30 ein, so dass die Schwenkbewegung nach Auslösen nicht ohne ein manuelles Anheben der gehäuseseitigen Gelenkarme erfolgen kann. Damit ist die stabile Stellung wie in Figur 3 gezeigt für den Fall des Unfalls gewährleistet. Diese Gelenkarmkonstruktion ist bevorzugt doppelt vorgesehen, einmal rechts und einmal links von der zentralen Zylinderführung 28, um eine hohe Stabilität der Schwenkbewegung zu erreichen.

An beiden Gelenkarmkonstruktionen sind Schenkelfedern 26 vorgesehen, die in der in Figur 1 dargestellten Normalstellung vorgespannt sind und die obere Prallplatte nach Lösung der Arretierung 34 in die in Figur 3 gezeigte Unfallstellung so schnell verfahren, dass der oben in der Beschreibungseinleitung dargestellte Peitscheneffekt mit Überschlagen des Kopfes über die Kopfstütze keinesfalls eintreten kann.

Der Magnetschalter mit einem verfahrbaren Arretierungsbolzen zum Auslösen der Arretierung 34 ist zum Zwecke bessere Klarheit der Zeichnungen nicht dargestellt; er sitzt jedoch in bevorzugter Weise an der hinteren Kante des Gehäusekörpers 14, mittig zwischen den beiden Vertikalstreben. Die elektrische Steuerung durch das Airbagsignal kann bevorzugt durch elektrische Leitungen durch das Innere der Lehne erfolgen. Gegebenenfalls ist ein von Hand lösbarer Stecker als Steckverbindung vorgesehen.

In besonders bevorzugter Weise ist diese elektrische Leitung im Inneren einer der beiden Vertikalstreben verlegt, wobei der elektrische Kontakt geschlossen wird, indem die Vertikalstrebe in ihrer eindeutigen Sollstellung einrastet.

Obwohl die vorliegende Erfindung anhand eines bevorzugten Ausführungsbeispiels vorstehend beschrieben wurde, ist sie darauf nicht beschränkt, sondern auf vielfältige Weise modifizierbar.

Schließlich können die Merkmale der Unteransprüche im wesentlichen frei miteinander und nicht durch die in den Ansprüchen vorliegende Reihenfolge miteinander kombiniert werden, sofern sie unabhängig voneinander sind.

## Patentansprüche

1. Kopfstütze (10) zum Einbau in Einzelsitze oder Rückbänke von Kraftfahrzeugen, die aus einer Normalstellung in eine Unfallstellung verfahrbar ist, mittels eines Mechanismus, der sensorgesteuert aktivierbar ist,
a) ein Gehäusekörper (14) der Kopfstütze fest mit dem Sitz verbindbar ist, wobei **gekennzeichnet dadurch, dass**
b) eine obere Prallplatte (16) und eine untere Prallplatte (18) mit dem Gehäusekörper (14) durch den Mechanismus verbunden ist,
c) wobei die obere Prallplatte (16) aus einer im wesentlichen horizontalen Ausrichtung in eine aufgerichtete, im wesentlichen vertikale Ausrichtung verschwenkbar gelagert ist,
d) wobei der Mechanismus dazu eingerichtet ist, zur Einnahme der Unfallstellung die untere Prallplatte (18) nach vorn in Fahrtrichtung zu verfahren,
e) und gleichzeitig die obere Prallplatte (16) nach oben um eine Verbindungsachse (20) zwischen oberer und unterer Prallplatte zu verschwenken.

2. Kopfstütze nach Anspruch 1, wobei der Mechanismus mechanisch wirksame Federelemente enthält, die in der Normalstellung vorgespannt sind.

3. Kopfstütze nach Anspruch 1 oder 2, wobei der Mechanismus wenigstens einen Gelenkarm (24) enthält, dessen Schenkel die obere Prallplatte (16) mit dem Gehäusekörper (14) verbindet.

4. Kopfstütze nach einem der vorstehenden Ansprüche, wobei in der Normalstellung ein Magnetschalter mit einem Arretierungbolzen die obere Prallplatte (16) am Gehäusekörper (14) arretiert und der Magnetschalter mit einer Signalleitung eines im Kraftfahrzeug vorhandenen Airbagaktivierungssystem verbindbar ist.

5. Kopfstütze nach Anspruch 4, wobei die Signalleitung durch eine Verankerungsstrebe (12) der Kopfstütze geführt ist.

6. Kopfstütze nach einem der vorstehenden Ansprüche, wobei die obere Prallplatte (16) wenigstens zwei, zueinander teleskopierbare Teile enthält.

7. Rückbank für Kraftfahrzeuge mit einer Kopfstütze (10) nach einem der vorstehenden Ansprüche.

8. Einzelsitz für Kraftfahrzeuge mit einer Kopfstütze (10) nach einem der vorstehenden Ansprüche 1 bis 6.

## Claims

1. Head restraint (10) for installing in individual seats or rear bench seats of motor vehicles, which head restraint is movable from a normal position into an accident position by means of a mechanism which is activatable in a sensor-controlled manner, wherein
a) a housing body (14) of the head restraint is fixedly connectable to the seat,
**characterized in that**
b) an upper impact plate (16) and a lower impact plate (18) are connected to the housing body (14) by the mechanism,
c) wherein the upper impact plate (16) is mounted so as to be pivotable from a substantially horizontal orientation into an upright, substantially vertical orientation,
d) wherein the mechanism is designed to move the lower impact plate (18) forwards in the direction of travel in order to take up the accident position,
e) and at the same time to pivot the upper impact plate (16) upwards about a connecting spindle (20) between the upper and lower impact plates.

2. Head restraint according to Claim 1, wherein the mechanism contains mechanically effective spring elements which are prestressed in the normal position.

3. Head restraint according to Claim 1 or 2, wherein the mechanism contains at least one articulated arm (24), the limb of which connects the upper impact plate (16) to the housing body (14).

4. Head restraint according to one of the preceding claims, wherein, in the normal position, a magnetic switch with a locking bolt locks the upper impact plate (16) to the housing body (14), and the magnetic switch is connectable to a signal line of an airbag activation system present in the motor vehicle.

5. Head restraint according to Claim 4, wherein the signal line is guided through an anchoring strut (12) of the head restraint.

6. Head restrain according to one of the preceding claims, wherein the upper impact plate (16) contains at least two mutually telescopic parts.

7. Rear bench seat for motor vehicles with a head restraint (10) according to one of the preceding claims.

8. Individual seat for motor vehicles with a head restraint (10) according to one of the preceding Claims 1 to 6.

## Revendications

1. Appuie-tête (10) destiné à être monté dans des sièges individuels ou des banquettes arrière de véhicules automobiles, qui peut être déplacé d'une position normale à une position d'accident, au moyen d'un mécanisme qui peut être activé de manière commandée par capteur,
a) un corps de boîtier (14) de l'appuie-tête pouvant être relié solidement au siège, **caractérisé en ce que**
b) une plaque d'impact supérieure (16) et une plaque d'impact inférieure (18) sont reliées au corps de boîtier (14) au moyen du mécanisme,
c) la plaque d'impact supérieure (16) étant montée de manière à pouvoir pivoter d'une orientation essentiellement horizontale à une orientation essentiellement verticale,
d) le mécanisme étant conçu pour déplacer la plaque d'impact inférieure (18) vers l'avant dans la direction de conduite afin d'adopter la position d'accident,
e) et pour pivoter simultanément la plaque d'impact supérieure (16) vers le haut autour d'un axe de liaison (20) entre la plaque d'impact supérieure et la plaque d'impact inférieure.

2. Appuie-tête selon la revendication 1, dans lequel le mécanisme comprend des éléments ressorts à action mécanique qui sont précontraints dans la position normale.

3. Appuie-tête selon la revendication 1 ou 2, dans lequel le mécanisme comprend au moins un bras articulé (24) dont la branche relie la plaque d'impact supérieure (16) au corps de boîtier (14).

4. Appuie-tête selon l'une quelconque des revendications précédentes, dans lequel un commutateur magnétique doté d'un boulon de blocage bloque la plaque d'impact supérieure (16) contre le corps de boîtier (14) dans la position normale, et le commutateur magnétique peut être relié à un câble de signal d'un système d'activation de coussin gonflable de sécurité prévu dans le véhicule automobile.

5. Appuie-tête selon la revendication 4, dans lequel le câble de signal est guidé à travers un montant d'ancrage (12) de l'appuie-tête.

6. Appuie-tête selon l'une quelconque des revendications précédentes, dans lequel la plaque d'impact supérieure (16) comprend au moins deux parties télescopiques les unes par rapport aux autres.

7. Banquette arrière pour véhicules automobiles comprenant un appuie-tête (10) selon l'une quelconque des revendications précédentes.

8. Siège individuel pour véhicules automobiles comprenant un appuie-tête (10) selon l'une quelconque des revendications 1 à 6.
